(19) Europäisches Patentamt
European Patent Office
Office européen des brevets

(11) **EP 1 932 584 A1**

(12) **EUROPEAN PATENT APPLICATION**
published in accordance with Art. 153(4) EPC

(43) Date of publication:
**18.06.2008 Bulletin 2008/25**

(51) Int Cl.:
*B01J 19/00* *(2006.01)* *B01J 8/00* *(2006.01)*
*G01N 35/08* *(2006.01)*

(21) Application number: **06791028.1**

(22) Date of filing: **18.09.2006**

(86) International application number:
**PCT/CN2006/002436**

(87) International publication number:
**WO 2007/031033 (22.03.2007 Gazette 2007/12)**

(84) Designated Contracting States:
**DE GB**

(30) Priority: **16.09.2005 CN 200510029727**

(71) Applicants:
• **Accelergy Shanghai R & D Center Co., Ltd.**
**Shanghai 201203 (CN)**
• **Accelergy Corporation**
**Palo Alto, CA 94303 (US)**

(72) Inventors:
• **WANG, Guilin**
**Pudong, Shanghai 201203 (CN)**
• **DIAO, Lichen**
**Shanghai 201203 (CN)**

(74) Representative: **Williams, Richard Andrew**
**Norman**
**Harrison Goddard Foote**
**40-43 Chancery Lane**
**London WC2A 1JA (GB)**

(54) **A REACTIVE SYSTEM**

(57) A system for conducting one or more reactions is provided. The system includes one or more reaction chambers, a temperature controller and an insulator each thermally coupled to the reaction chambers, and a heat radiation shield. The insulator comprises a vacuum environment. The system is provided with the temperature controller, heat radiation shield and insulator such that the temperature of the reaction chambers can be accurately controlled, heat loss, gain and fluctuation of the reaction chambers can be minimized, and temperature uniformity of the reaction chambers can be ensured.

FIG. 1

## Description

## FIELD OF THE INVENTION

The present invention relates to a reaction system, and particularly to a reaction system for conducting one or more reactions.

## BACKGROUND OF THE INVENTION

In materials research, a great deal of screening research is often needed to determine suitable material synthesis reactions and various properties of materials. For example, to select a catalyst for use in a particular application, a large number of potential catalysts are screened to determine which catalysts have the most desirable rate of reaction at specified conditions, the conditions at which the rate of reaction is maximized, and the proportion by which a given catalyst favors a desired reaction compared to other possible undesirable reactions.

In one conventional screening process, potential catalysts are evaluated sequentially. First of all, different catalysts are evaluated under the same conditions. A micro reactor or pilot plant is used to evaluate a catalyst at specified conditions. Upon completion of an experiment, the catalyst involved is removed and the experiment is repeated with the next catalyst, until a suitable catalyst is found. The experiments can then be repeated at varying conditions until optimal conditions for that suitable catalyst are found. Sequential testing in this manner can be very time-consuming and require significant resources.

To solve the above problem, in another conventional process, multiple reactions are performed in parallel perform in multiple reactors. Using this process, a large number of reactions can be simultaneously performed to synthesize, screen and evaluate catalysts, so that efficiency is enhanced. For the evaluation to be useful, however, the conditions across the multiple reactors must be substantially the same. One of the important conditions is reaction temperature.

Various methods can be used to control temperature. One conventional method is to independently control the temperature for each one of the multiple reactors. A drawback of this method is the high cost for constructing, monitoring and controlling separate reactors. Moreover, particularly in more temperature sensitive reactions, slight variation across different reactors may cause variance in the multiple reactions. Therefore, this method is not suitable to temperature sensitive reactions.

To ensure substantially same temperature across multiple reactors, attempts have been made in the art to construct multiple reactors from a single block of metal or similar conducting material. The temperature of the entire block of multiple reactors can then be controlled by heating or cooling the block as a whole, and allowing the block to reach equilibrium to ensure temperature uniformity across the multiple reactors. However, drawbacks with constructing multiple reactors from a single block of metal include the expense of machining multiple reactors in the block and the large weight of the final apparatus. Moreover, as the size of the individual reactors increases and the block weight increases accordingly, this method becomes more and more difficult in practice. Moreover, more energy is required for the heating and cooling of whole block of metal. Finally, since heat may be lost through conduction, convection or radiation, it is difficult to accurately control the temperature during heating and cooling.

Therefore, there is a need to provide a system that is able to precisely control the temperature and the uniformity of temperature across multiple reactors and to minimize heat loss or gain or fluctuation among the reactors.

## SUMMARY OF THE INVENTION

An object of the present invention is to provide a reaction system which requires less energy and shorter time to reach equilibrium.

Another object of the present invention is to provide a reaction system which is able to ensure that temperature is uniformly distributed across reaction chambers.

Yet another object of the present invention is to provide a reaction system which is able to reduce heat loss, gain or fluctuation among reaction chambers.

Yet another object of the present invention is to provide a reaction system with a relatively smaller total weight.

In order to achieve the above objects, a reaction system is provided and the system includes reaction chambers, a temperature controller thermally coupled to the reaction chambers, an insulator thermally coupled to the reaction chambers, and a heat radiation shield. The insulator includes a vacuum environment.

Compared with existing technologies, the reaction system is provided with a heat radiation shield and an insulator including a vacuum environment and therefore has the advantages of requiring less energy and shorter time in reaching equilibrium, ensuring uniform temperature distribution, and reducing heat loss, gain or fluctuation among reaction chambers.

In the above system, the temperature controller includes first temperature control elements thermally coupled to a first side and a second side, respectively, of the reaction chambers. The reaction system may further include a temperature sensor. Multiple reaction chambers in the system may be placed in parallel with each other, and each substantially equidistant from the reaction chambers adjacent to it, and all equidistant from a shell of the system. The reaction system may further include an opening to selectively replace the vacuum environment with a fluid to rapidly change the temperature of the system.

In order to achieve the above objects, a reaction system is provided and the reaction system includes at least one reaction chamber, temperature control elements thermally coupled to two sides, respectively, of the at least one reaction chamber, and an insulator thermally coupled to the at least one reaction chamber.

Compared with existing technologies, the reaction system is provided with a temperature controller thermally coupled to two sides of the at least one reaction chamber and an insulator and therefore has the advantages of requiring less energy and shorter time in reaching equilibrium, ensuring uniform temperature distribution, and reducing heat loss, gain or fluctuation among reaction chambers, and having a smaller weight.

The reaction system may further include a heat radiation shield and/or a temperature sensor. The insulator may include a vacuum environment. The temperature control elements thermally coupled to two sides of the reaction chamber may be part of a same temperature control element. Similarly, the reaction system may further include an opening to selectively replace the vacuum environment with a fluid to rapidly heat or cool the system.

In order to achieve the above objects, the present invention further provides another reaction system that includes a multiple of the above reaction systems arranged in arrays.

A detailed description of specific embodiments of the invention will be rendered hereafter with reference to the drawings. But the specific embodiments do not constitute any limitation on the scope of the claims.

**BRIEF DESCRIPTION OF THE DRAWINGS**

FIG. 1 is a 3-D perspective view of a reaction system according to the present invention.

FIG. 2 is a top view of the system of FIG. 1.

FIG. 3 is a bottom view of the system of FIG. 1.

FIG. 4 is a view of a cross-section taken along axis I-I as shown in FIG. 3.

FIG. 5 is a side view of the system of FIG. 1.

FIG. 6 is a view of a cross-section taken along axis II-II as shown in FIG. 5, in which the shell of the system is removed for better visibility.

FIG. 6(a) is a view of a cross-section of a reaction system containing reaction tubes according the present invention.

FIG. 6(b) is a structural view of a reaction tube and a holder, the reaction tube being partially omitted in the drawing along its longitudinal direction.

FIG. 6(c) is a structural view of another reaction tube and holder, the reaction tube being partially omitted in the drawing along its longitudinal direction.

FIG. 6(d) is a structural view of yet another reaction tube and holder.

FIG. 6(e)-6(h) are schematic views of hanging style holders, respectively.

FIG. 7 is a side view of a reaction system according to a second embodiment of the present invention.

FIG. 8 is a perspective view of the system according to the second embodiment of the present invention.

FIG. 9 is a top view of the system according to the second embodiment of the present invention.

FIG. 10 is a view of a cross-section taken along axis III-III as shown in FIG. 9.

FIG. 11 is a side view of a reaction system according to a third embodiment of the present invention.

FIG. 12 is a perspective view of the system according to the third embodiment of the present invention.

FIG. 13 is a top view of the system according to the third embodiment of the present invention.

FIG. 14 is a view of a cross-section taken along axis IV-IV as shown in FIG. 13.

FIG. 15 is a side view of a reaction system according to a fourth embodiment of the present invention.

FIG. 16 is a perspective view of the system according to the fourth embodiment of the present invention.

FIG. 17 is a top view of the system according to the fourth embodiment of the present invention.

FIG. 18 is a view of the cross-section taken along axis V-V as shown in FIG. 17.

FIG. 19 is a side view of a reaction system according to a fifth embodiment of the present invention.

FIG. 20 is a perspective view of the system according to the fifth embodiment of the present invention.

FIG. 21 is a top view of the system according to the fifth embodiment of the present invention.

FIG. 22 is a view of the cross-section taken along axis VI-VI as shown in FIG. 21.

FIG. 23 shows three of the system of FIG. 7-10 in series.

FIG. 24 shows three of the system of FIG. 11-14 in series.

FIG. 25 shows three of the system of FIG. 15-18 in series.

FIG. 26 shows three of the system of FIG. 19-22 in series.

## DETAILED DESCRIPTION OF THE EMBODIMENTS

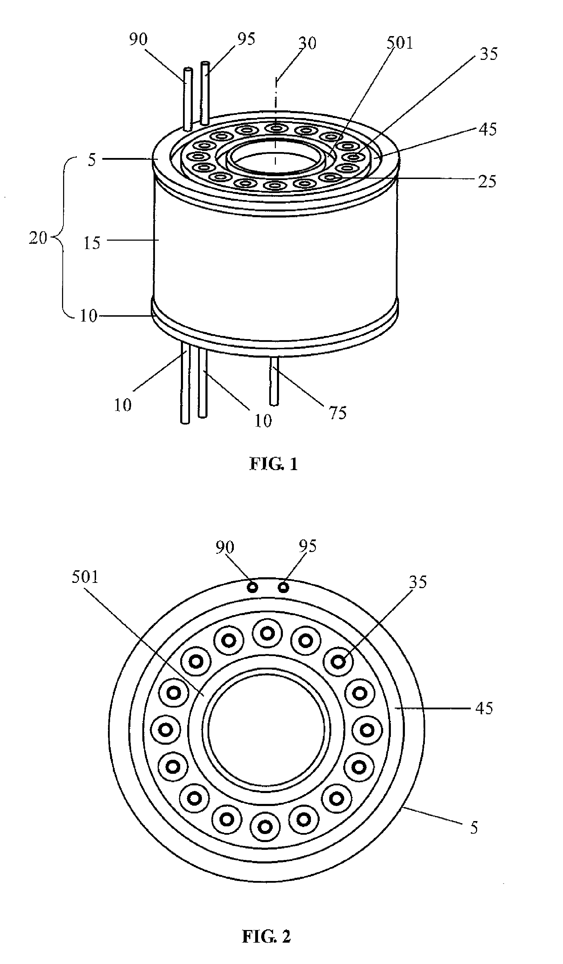

Referring to FIGS. 1 to 6, a reaction system in a first embodiment of the present invention can be used to conduct multiple reactions. The reaction system includes a shell 20 of a cylindrical configuration, and the shell 20 includes a top plate 5, a bottom plate 10 and an outer wall 15 with a cylindrical surface.

The system includes a plurality of reaction chambers 25. In this embodiment, the system has sixteen reaction chambers 25. The reaction chambers 25 are hollow cylindrical containers used to receive catalysts, reactants or other materials. Each reaction chamber 25 has a top 35 and a bottom 40. The top is placed at the top plate 5 of the shell 20 and the bottom 40 is placed at the bottom plate 10 of the shell 20. The top 35 and bottom 40 may be fastened to the top plate 5 and the bottom plate 10, respectively, of the shell 20 by way of welding, meshing or other connection methods, or may be integrally formed with the top plate 5 and bottom plate 10, respectively, of the shell 20. Each reaction chamber 25 is parallel with a center axis 30 of the shell 20, and the reaction chambers 25 are in a circular arrangement within the shell 20 such that each reaction chamber 25 is equidistant from the reaction chambers 25 adjacent to it and all of the reaction chambers 25 are equidistant from the center axis 30 of the shell 20 and/or from an outer wall 15 of the shell 20.

Referring to FIGS. 2 to 4, the system comprises a temperature controller. The temperature controller includes a temperature monitor (not shown) and a pair of first temperature control elements 45 and 50, which are adapted to control the temperature of all the reaction chambers 25. The temperature monitor is used to monitor temperatures of the first temperature control elements 45 and 50. The first temperature control element 45 is mounted on the top plate 5 and therefore thermally coupled to the top 35 of each reaction chamber 25, and the other first temperature control element 50 is mounted on the bottom plate 10 and therefore thermally coupled to the bottom 40 of each reaction chamber 25, i.e., the first temperature control elements 45 and 50 thermally coupled to two ends of each reaction chamber 25. By heating or cooling the top plate 5 and bottom plate 10, the reaction chambers 25 can be heated or cooled from the top 35 and bottom 40 of the reaction chambers 25. When each reaction chamber 25 is at substantially a same temperature or at substantially a same temperature gradient, temperature of the system reaches equilibrium. Each reaction chamber 25 is at substantially the same temperature when the top 35 and bottom 40 of the reaction chambers 25 is at substantially a same temperature, and is at substantially the same temperature gradient when the top 35 and the bottom 40 of the reaction chambers 25 are at different temperatures. Multiple pairs of first temperature control elements may be provided at the top plate 5 and the bottom plate 10 respectively. For example, one more pair of first temperature control elements may be provided at a groove 501 on the top plate 5 and a groove 101 on the bottom plate 10, respectively, in order to achieve a better temperature control effect.

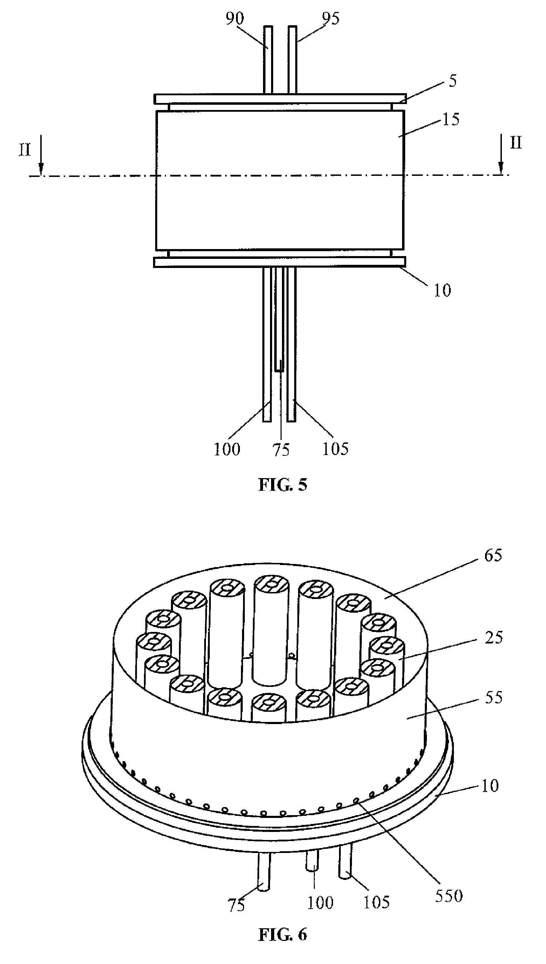

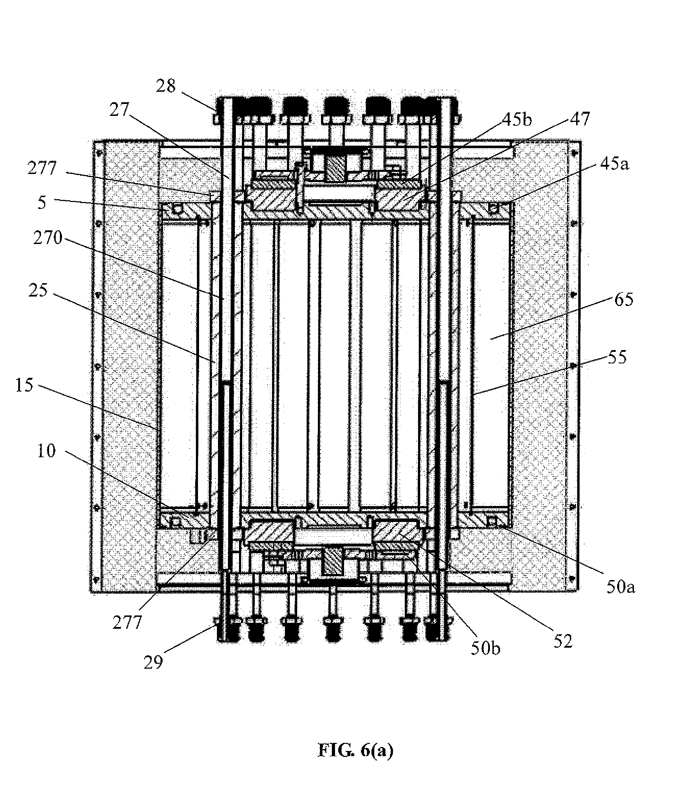

Additionally, the reaction system may be provided with a thermal buffer member between the temperature control elements and the reaction chambers. For example, in a reaction system as shown in FIG. 6(a), thermal buffer members 47 (or 52) are respectively provided between the pair of temperature control elements 45b (or 50b) and the reaction chambers 25, such that the pair of temperature control elements 45b (or 50b) are thermally coupled to the reaction chambers 25 via the thermal buffer members 47 (or 52), to achieve a heat buffer function, improve performance of the system when used at a relatively lower temperature, e.g., below 500°C, and reduce temperature differences between the reaction chambers 25. The thermal buffer members 47 (or 52) may be made from materials with high thermal conductivity, such as copper.

In the current embodiment, the first temperature control elements 45 and 50 are single elements thermally coupled to the top plate 5 and the bottom plate 10 respectively, therefore by heating or cooling the top plate 5 and the bottom plate 10 temperature of each reaction chamber 25 may be caused to change (become hotter or cooler) such that the reaction chambers 25 can carry out same or different reactions in a same temperature. Alternatively, the temperature controller may be configured in other manners, such as configured as a plurality of separate pairs of temperature control elements 45 and 50, each thermally coupled to the top 35 and the bottom 40 of a respective reaction chamber 25. The temperature monitor may separately or wholly monitor the temperatures of the temperature control elements 45 and 50 according to actual needs, such that one or some or all of the reaction chambers 25 may be independently controlled. The temperature control element 45 or 50 as used herein may include, without limitation, one or more temperature control elements, heating elements, cooling elements or any elements may cause a change in temperature of anything to which it is thermally coupled, such as automatic temperature controllers, manual temperature controllers, heaters, and refrigeration units.

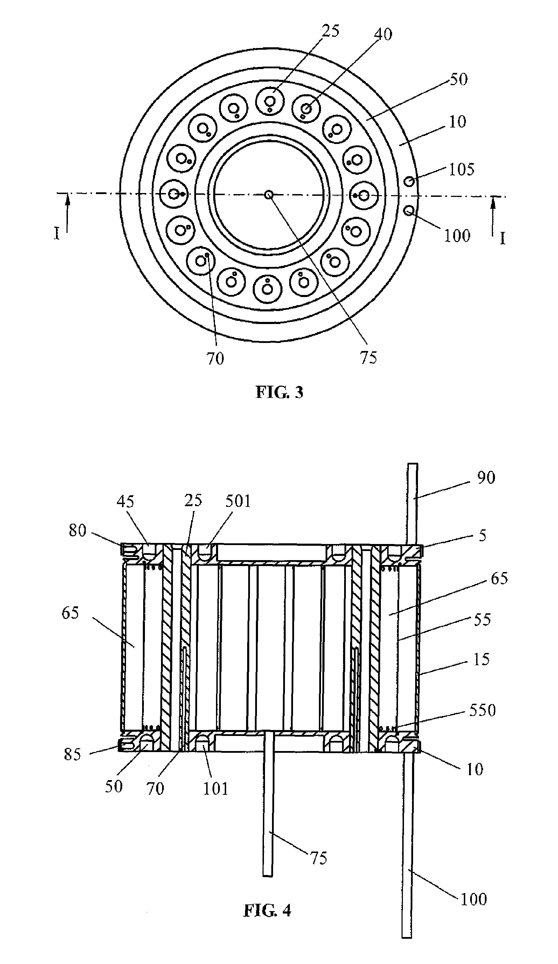

Referring to FIG. 4, the reaction system may further comprise one or more second temperature control elements 80, 85, which may be mounted on the top plate 5 and/or the bottom plate 10 respectively, or at other positions of the system, such as the outer wall 15 or the reaction chamber 25. The second temperature control element 80, 85 may include openings 90, 95, 100 and 105, which might be any elements which allow introduction or discharge of a fluid to or from the second temperature control element 80, 85, such as valves or tubes. The second temperature control element 80, 85 may be flooded with a fluid through the openings 90, 95, 100, and 105 and rapidly change the temperature of the system. The openings 90, 95, 100, 105 may selectively control fluid flow through the second temperature control element 80, 85. The second temperature control element 80, 85 may distribute a fluid through the top plate 5 or bottom plate 10 via a channel system such that the top plate 5 or bottom plate 10 is rapidly heated or cooled.

In the current embodiment, the top plates 5, the bottom plates 10, the outer wall 15, the top 35, the bottom 40, and the one or more reaction chambers 25 are made from materials with high thermal conductivity.

The reaction system may be wholly placed in a housing. The housing may have temperature control function such that the outer wall 15, the top plate 5 and the bottom plate 10 of the system are heated or cooled to a desired temperature. The housing may have heat preservation function to reduce heat exchange between the system and an outside environment.

The reaction system further includes several elements to prevent unintended heat loss or gain through conduction, convection, or radiation and ensure the thermal stability of the system. In the current embodiment, the reaction system uses a cylindraceous outer shield 55 as shown in FIG. 4 to reflect radiation from or to the reaction chambers 25 so as to prevent heat transfer between the reaction chambers 25 and the outside. The outer shield 55 may be parallel with the outer wall 15 and placed outside of the reaction chambers 25, or may be directly mounted on the outer wall 15. The reaction system may be further provided with multiple outer shields 55 or the likes to maximize the thermal stability of the system.

Further, the reaction system may employ an inner shield (not shown). The inner shield is placed inside of the reaction chambers 25 to prevent radiation towards the inner section of the shell 20.

The surface of the outer shield 55 or inner shield may be coated with a material or may be constructed of a material that prevents or reduces radiation such as a reflective material or reflective insulation. Reflective materials include radiant barriers and reflective insulations. A radiant barrier is a single sheet of reflective materials. Reflective insulation is an insulating system of reflective sheets and insulator designed together act as insulation. Thus, reflective insulation would consist of a number of layers insulator and reflective sheets. Examples of reflective materials include without limitation, reflective foils, stainless steel, high-temperature metal alloy, and other metal or non-metal materials known in the art that can be made to have a smooth surface and are reflective to infra-red or visible light.

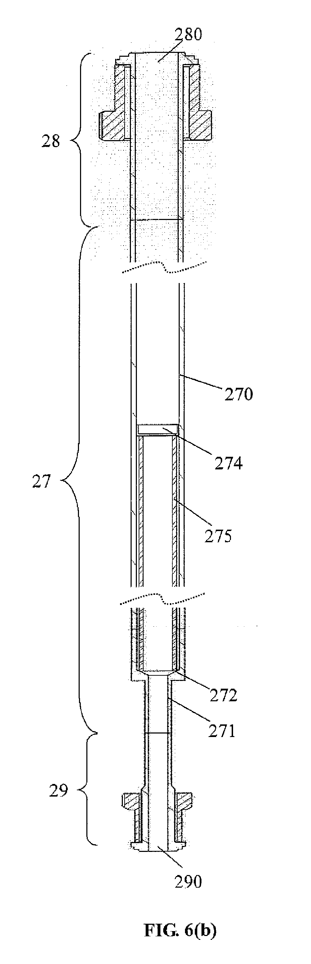

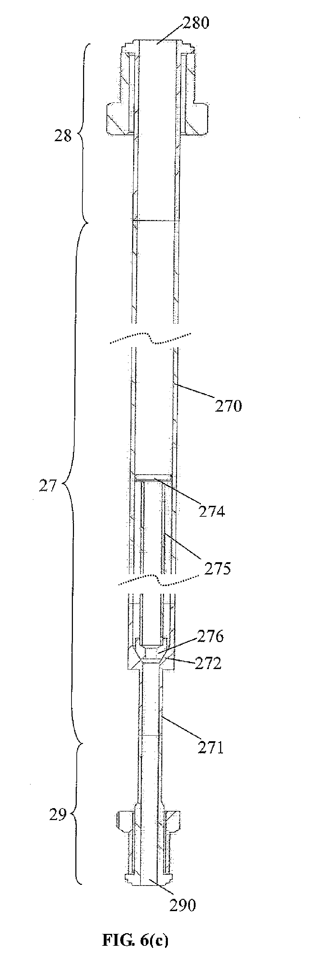

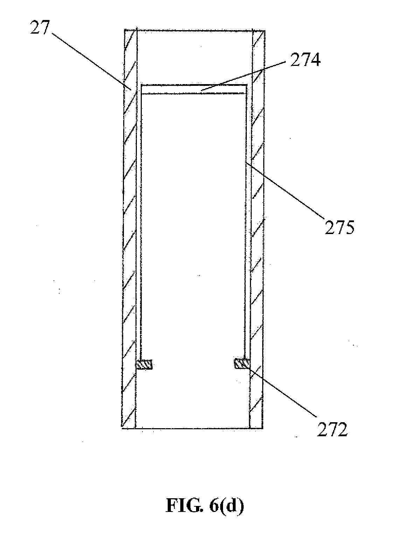

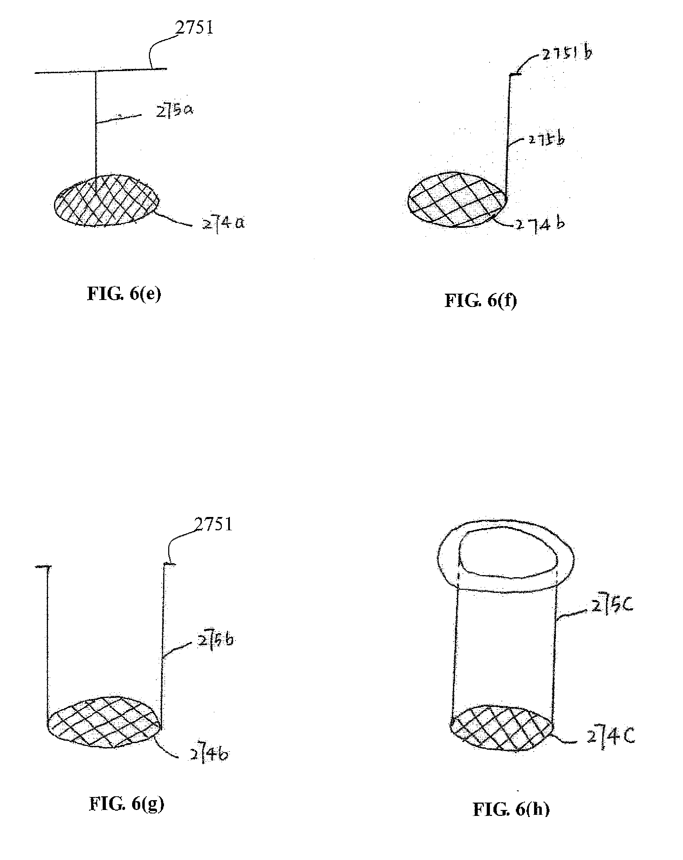

Referring to FIGS. 4 and 6, the reaction system further includes an insulator 65 between the reaction chambers 25 and the outer wall 15 and/or the center of the shell 20, which is used to further reduce heat loss or gain. The insulator 65 surrounds each of the reaction chambers 25 to prevent heat loss or gain to or from the reaction chambers 25. The insulator 65 may vary depending on the specific needs of the system. For example, the insulator may include a cavity, wherein the cavity is substantially a vacuum chamber, a cavity filled with air, or a cavity filled with some other insulating material. Examples of other insulating materials include without limitation foam, polyurethane foam, perlite, fiberglass, and Teflon. The insulator may also be a series of cavities or insulators as described herein, wherein each cavity may be a vacuum chamber, a cavity filled with air, or filled with another insulating material. As used herein a vacuum chamber includes chambers with a partial vacuum and includes chambers having a psi in the range of $10^{-4}$ to $10^{-6}$ psi, or a psi in the range of $10^{-6}$ to $10^{-10}$ psi.

The outer shield 55 may be used in combination with the insulator 65 and the outer shield 55 may be placed inside the cavity containing the insulator 65. Further, several inner and/or outer shields 55 may be employed in combination with or without an insulator 65 consisting of several cavities to reduce heat loss or gain in the reaction system. The outer shield 55 may be provided with through holes 550 to connect insulators 65 inside and outside the outer shield 55.

Optionally, the reaction system may comprise one or more guiding portions adapted to introduce or remove reactants, catalysts or any other material to or from the reaction chambers 25. Said guiding portion may be configured in any manner, such as may be configured as guiding pipes, channels or openings, if only the guiding portions may not substantially interfere with the heat conserving aspects of the embodiment or that the system may return rapidly to equilibrium after introduction or removal of the guiding portions. Additionally, the guiding portions could be used to alter the temperature of the system by providing the guiding portions at a desired temperature, for example by preheating or precooling the guiding portions. The guiding portions may be at the top 35 and/or bottom 40 of each reaction chamber 25 and may be a single guiding portion for each reaction chamber 25 or multiple guiding portions for each reaction chamber 25 or any variance thereof. Moreover, the guiding portions may include a preheater or precooler to preheat or precool the material prior to the material's introduction to the reaction chambers 25. Through the use of such guiding portions the system may be configured to be a batch or continuous process or any combination thereof, such as a semi-batch or semi-continuous process.

Referring to FIGS. 1 and 4, optionally, the current embodiment may include an insulator opening 75 that may be selectively opened or closed, wherein the insulator openings are coupled to the insulator 65. Where the insulator 65 is a vacuum, the insulator opening 75 may be used to create the vacuum, or where the insulator 65 is another material the insulator opening 75 may be used to add or remove said material from the system. In another embodiment, the insulator opening 75 may be used as a third temperature control element allowing the exchange of materials in the insulator 65. For example, where the insulator is a vacuum, the insulator opening 75 could be used to release the vacuum and/or flood the insulator cavity with a fluid. In another example a second insulator opening (not shown) is provided such that the first insulator opening 75 allows a vacuum to form in the insulator 65 and the second insulator opening, when opened, allows the introduction of a fluid into the system. If the insulator 65 includes a series of separate cavities, a plurality of openings may be provided and used to selectively create vacuum in or introduce fluids to the separate cavities.

Referring to FIG. 4, optionally, the system may include a temperature sensor 70. The temperature sensor 70 may be used to sense the temperature at specific points in, or at the surface of, one or more of the reaction chambers 25. Alternatively, a temperature sensor 70 may be placed in or near the reaction such that temperature of the reaction may be monitored.

As shown in FIGS. 1 to 6, the shell 20 of cylindrical configuration allows for ease in arranging the reaction chambers 25 such that each is equidistant from the adjacent reaction chambers. However, in specific instances, the shell 20 may employ other configurations. For example, the shell 20 of the system may be in any three dimensional shape such as any polyhedron, a cube, box or sphere, or may be of any cylindrical shape.

Materials suitable for use in constructing the reaction chambers 25 or other parts of the system include any that can withstand the temperatures, pressures and chemicals, such as acids, bases, or other reactive compounds. Examples of said materials include metals and their alloys, including but not limited to various grades of steel and stainless steel, super alloys, engineering plastics, ceramics, composite materials, polymers, or a combination of any of the foregoing.

Temperature ranges for use in the present embodiment include from about ambient temperature to about 600□, from about ambient temperature to about 800□, and from about ambient temperature to about 1000□, from about ambient temperature to about 1200□, from about ambient temperature to about 14000. In addition, it is contemplated that the present embodiment may also be used for temperature ranges from well below ambient temperature to well above ambient temperature depending on the particular application.

Advantages of the current configuration include a reduction in energy to heat the system to equilibrium, a reduction in the time for the system to come to equilibrium or to cool down, improved uniformity of temperature throughout the system and in particular in each reaction chamber, and a decrease in the weight of the overall system.

Because the rate of heat transfer, whether through conduction, convection or radiation, is dependent on the temperature difference between the higher temperature area and the lower temperature area, another embodiment of the current invention is provided to reduce said temperature difference and thus reduce the rate of heat transfer, either loss or gain.

A relationship between temperature and a rate of heat transfer through conduction can be seen in the following formula:

$$(1) \quad q = \frac{kA(T_{hot} - T_{cold})}{d}$$

wherein:

$q$ is the heat transferred per unit time,

$k$ is the thermal conductivity of the barrier,

$A$ is the area,

$(T_{hot} - T_{cold})$ is the is the temperature difference, and

$d$ is the thickness.

A relationship between temperature and a rate of heat transfer through convection can be seen in the following formula:

$$(2) \quad q = KA(T_{hot} - T_{cold})$$

wherein:

$q$ is the heat transferred per unit time,

$K$ is the convection heat transfer coefficient of the process,

$A$ is the heat transfer area of the surface, and

$(T_{hot} - T_{cold})$ is the temperature difference.

A relationship between temperature and a rate of heat transfer through radiation can be seen in the following formula:

$$(3) \qquad P = e\sigma A(T_{rad}^4 - T_{cold}^4)$$

wherein:

$P$ is the radiated power,

$e$ is the emmisivity,

$\sigma$ is Stefan's constant,

$A$ is the radiating area,

$T_{rad}$ is the temperature of the radiator, and

$T_{cold}$ is the temperature of the surroundings.

In another embodiment, the system as shown in FIGS. 1 to 6 is provided with a fourth temperature control element (not shown) at its outer wall 15 to reduce temperature difference between the reaction chambers 25 and the outer wall 15. The reduction in temperature difference results in the reduction of the rate of heat loss or gain by the system by reducing the driving force of heat transfer, whether through conduction, convection or radiation. Optionally, a second insulator may be inserted between the outer wall 15 and the fourth temperature control element to further reduce heat loss or gain. The insulator may be any insulating material, a vacuum, or combination thereof.

In the reaction system, catalysts, reactants or other materials may be directly loaded in the reaction chamber 25. Or maybe a reaction tube is added, and the catalysts, reactants or other materials are firstly loaded in the reaction tube and then the reaction tube is assembled in the reaction chamber 25. Where the reaction tube is added, front-end pipeline and back-end pipeline of the system may be connected to the reaction tube via couplings and connectors, and compared with direct connection with the reaction chamber 25, such a connection with the reaction tube is more convenient and reliable. Moreover, by using the reaction tube, different experiment request may be satisfied by replacing the reaction tube with another one, but replacing of the reaction chambers 25 or the system is no longer needed, and therefore applications of the system become more flexible. Further, the use of the reaction tube also can make loading and cleaning of the catalysts or the likes become more conveniently.

A holder may be provided in the reaction tube or the reaction chamber to hold the catalysts, reactants or other materials that are loaded into the reaction tube or the reaction chamber. The holder may include a holding element that is substantially perpendicular to the extending direction of the reaction tube or the reaction chamber, and a supporting element that is used to support, fasten, or hang the holding element.

Since situations are similar whether the holder is mounted in the reaction tube or in the reaction chamber, hereafter only a situation that the holder is mounted in the reaction tube is described.

An embodiment of holder is shown in FIG. 6(b) (where is broken by the broken lines in FIG. 6(b) means where the reaction tube 27 is partially omitted at its longitudinal direction). The reaction tube 27 is formed with a step portion 272. The holder includes a holding element 274 and a supporting element 275 standing upon the step portion 272 to support the holding element 274. By such a configuration, the position of the holding element 274 can be adjusted by using supporting elements with different lengths, such that space in the reaction tube 27 for loading the reactants or the like can be adjusted according to specific amount of reactant needed by specific experiments.

If the reaction tube 27 is a reducing tube having different cross sections, the step portion 272 may be formed at boundary between tube portions with different cross sections (as shown in FIG. 6(b)). If the reaction tube 27 is not a reducing tube, the step portion 272 may be a projection protruded from an inner surface of the reaction tube 27 (as shown in FIG. 6(d)), such as a projecting ring formed on the inner surface of the reaction tube 27, a projecting portion, or two or more projecting portions arranged in a circle perpendicular to an extending direction of the reaction tube 27.

The holding element 274 may be net sieves, sand cores, or any other elements which can be used to hold catalysts, reactants or other solid materials but allow fluids (gases or liquids) to pass over. The supporting element 275 may be a length of pipe (as shown in FIG. 6 (b)), which might be a straight pipe, a reducing pipe or a curving pipe, also may be one or more supporting racks extending from the holding element 274 either in an erect, screwy or irregular extending manner, or may be any structures made from porous materials. In a word, the supporting element 275 may be any structures that can stand upon the step portion 272 to support the holding element 274 while allow fluids to pass over. The holding element 274 and the supporting element 275 may be formed integrally or separately.

In another embodiment, the holder may be hung in the reaction tube by the supporting element. The supporting element may include at least one hanging limb and a rod (as shown in FIG. 6(e), 274(a) is a holding element, 275(a) is a supporting element, and 2751(a) is a rod), a hook (as shown in FIGS. 6(f) and 6(g), 274(b) is a holding element, 275(b) is a supporting element, and 2751(b) is a hook), a ring-shaped plate (as shown in FIG. 6(h), 274(c) is a holding element, 275(c) is a supporting element, and 2751(c) is a ring-shaped plate) or etc. that extends from one end of the hang limb and retained near an entrance of the reaction tube. Alternatively, the supporting element may be pipe-shaped. The holding element and the supporting element may be formed integrally or separately. Therefore the position of the holding element also can be adjusted by adjusting length of the supporting element, such that space in the reaction tube for loading the reactants can be adjusted.

In the above two embodiments, The holder may further include a force receiving portion for receiving forces from an outside of the reaction tube, so as to facilitate taking the holding element and (or) the supporting element out of the reaction tube after the reaction is finished.

The force receiving portion may be located at the holding element. For example, as shown in FIG. 6 (b), the reaction tube 27 has an inlet 280 and an outlet 290. A surface of the holding element 274 adjacent to the outlet 290 of the reaction tube 27 can be used to receive a force from the outlet 290, such as a push force offered by a rod inserted from the outlet 290, such that the holding element 274 together with the supporting element 275 can be pushed out (when the holding element 274 and the supporting element 275 are integrally formed), or the holding element 274 can be pushed out alone and then the supporting element 275 can be poured out of the reaction tube 27 (when the holding element 274 and the supporting element 275 are separately formed).

The force receiving portion also may be located at the supporting element. For example, as shown in FIG. 6(b), if the supporting element 275 is a straight pipe, a force receiving portion may be a projecting ring (not shown) formed on any positions of the inner surface of the pipe that can receive a force exerted from the outlet 290 and along an extending direction of the reaction tube 27. The supporting element 275 also may be a pipe with a small inner diameter and a thick wall, which may stand upon the step portion 272 and partially exposed to an inner scope surrounded by the step portion 272 to receive a force from the outside (276 as shown in FIG. 6(c)).

Particularly, the force receiving portion may be located at a joint of the holding element and the supporting element. For example, as to the hanging holders as shown in FIGS. 6(e) to 6(h), the joint of the holding element and the supporting element can receive a force from an outside of the reaction tube, such that the holding element and supporting element can be pulled out of the reaction tube by the force.

The force receiving portion also can be formed separately from the holding element and the supporting element. For example, as shown in FIG. 6(b), the force receiving portion is a net plate or a holed plate (not shown) disposed at an end of the supporting element 275 that is opposite to the end mounted with the holding element 274.

Additionally, as shown in FIG. 6(b), in a preferred embodiment, the reaction tube 27 is a reducing tube including a length of main tube 270 and a length of smaller tube 271 that has a smaller outer diameter than the main tube 270. The reaction tube 27 has one end thereof (the end of the main tube 270) connected to a front-end pipeline or module via a connector 28 and the other end thereof (the end of the smaller tube 271) connected a back-end pipeline or module via a connector 29. The connector 29 may include a connection device for matching with a corresponding device of the back-end pipeline or module, and a seal device for sealing the joint of the connection device and the corresponding device of the back-end pipeline or module. For example, in this preferred embodiment, the connection device is a screw thread pipe 291 and the seal device is a seal pipe 292.

The connector 29 at the end of the smaller tube 271 is relatively smaller and it may be configured smaller than the inside diameter of the reaction chamber 25 and therefore is allowed to pass through the reaction chamber 25, such that the reaction tube 27 can be conveniently assembled and detached. Referring to FIG. 6(a), during assembling, the connector 29 of the reaction tube 27 passes through the reaction chamber 25 to allow the main tube 270 enter the reaction chamber 25, and then the reaction tube 27 can be fastened from two ends of the reaction tube 27 by two retainer 277, respectively. During detaching, after the retainer 277 is opened, the reaction tube 27 can be easily pulled out of the reaction chamber 25.

Materials suitable for use in constructing the reaction tube 27, the holding element 274 or the supporting element 275 include any that can withstand the high temperatures, pressures and chemicals, such as acids, bases, or other reactive compounds. Examples of said materials include metals and their alloys, including but not limited to various grades of steel and stainless steel, super alloys, engineering plastics, ceramics, composite materials, polymers, or a combination of any of the foregoing.

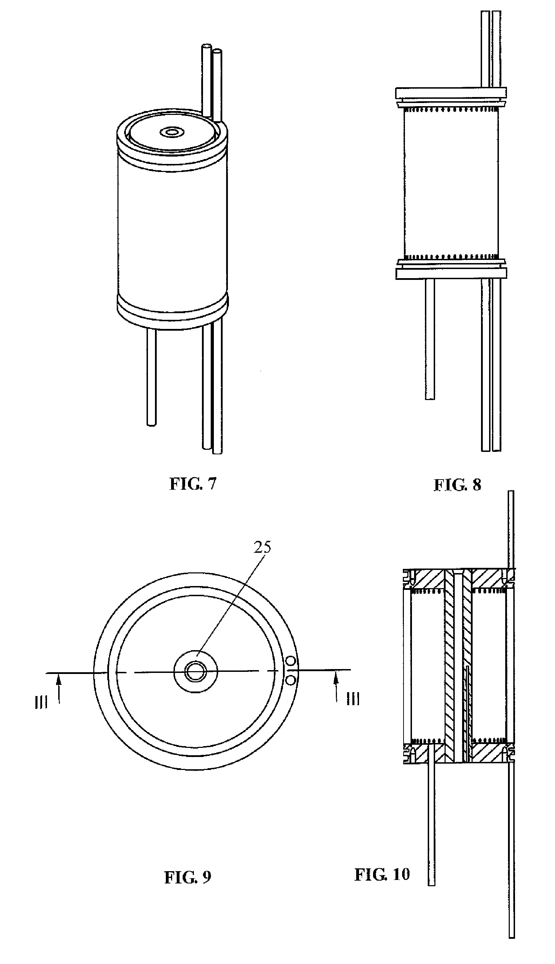

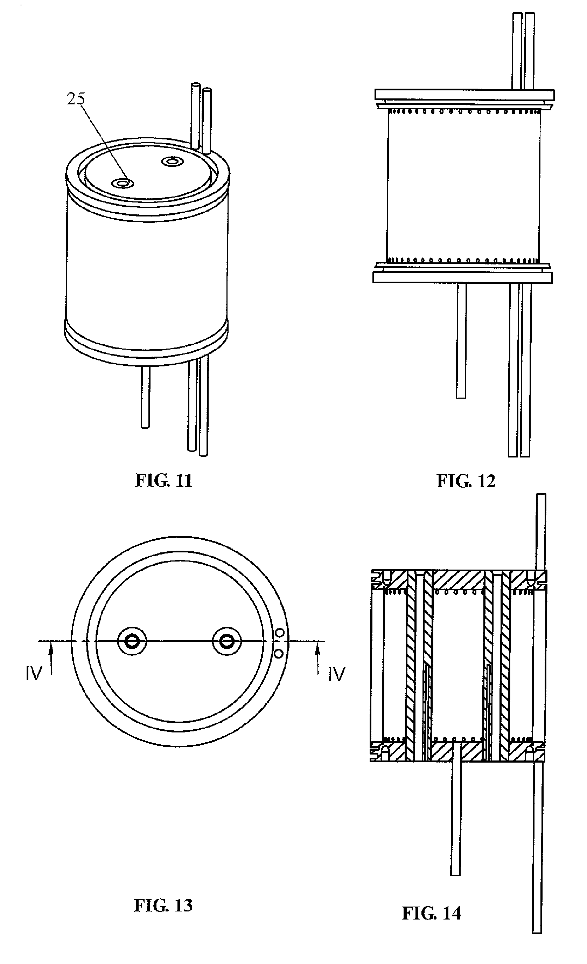

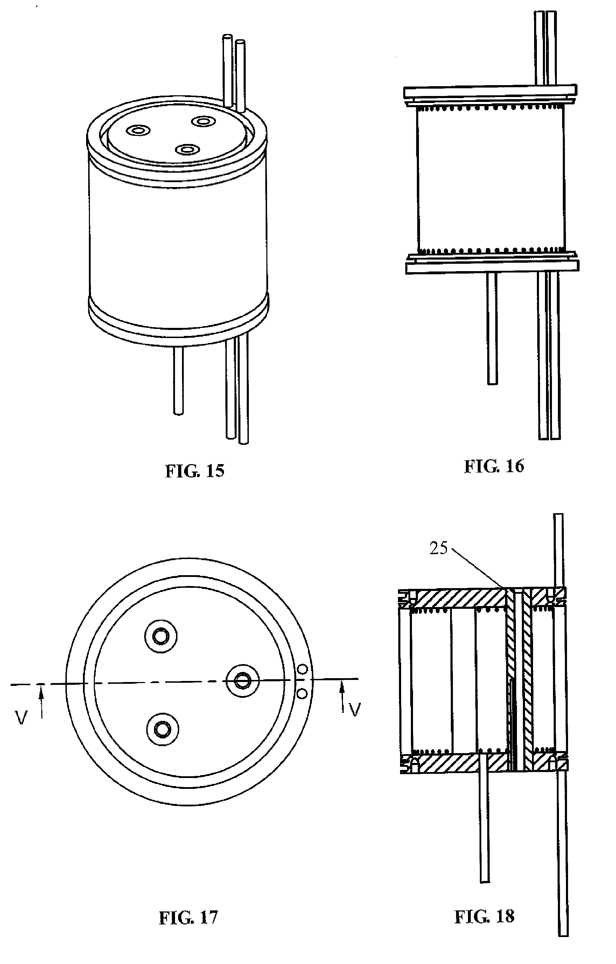

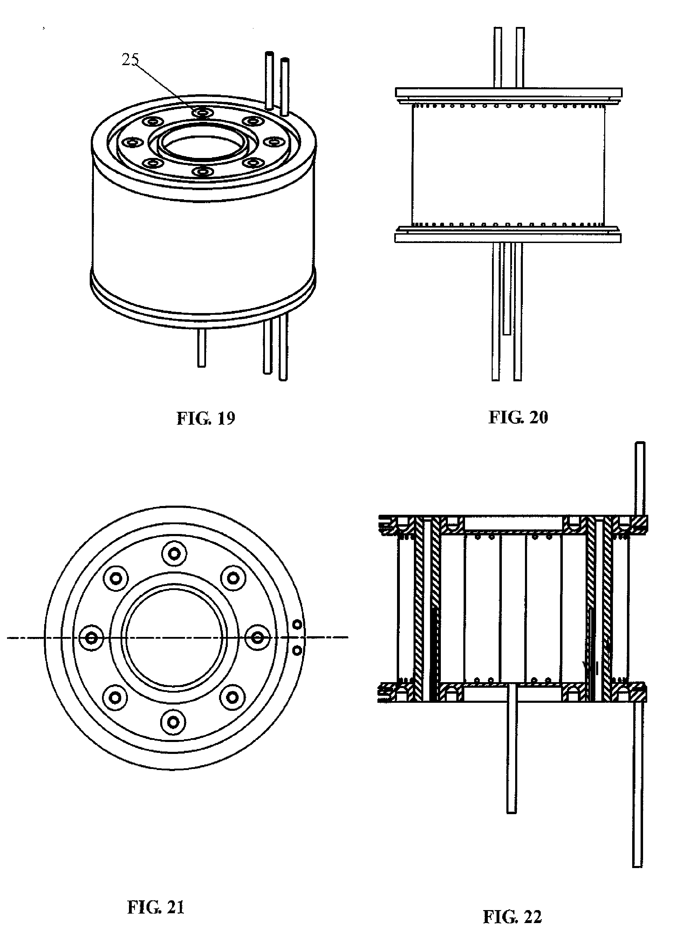

In the current embodiment, the reaction system includes sixteen reaction chambers 25. However, any number of reaction chambers 25 may be employed. For example, a second embodiment as shown in FIGS. 7 to 10 has one reaction chamber 25, a third embodiment as shown in FIGS. 11 to 14 has two reaction chambers 25, a fourth embodiment as shown in FIGS. 15 to 18 has three reaction chambers 25, and a fifth embodiment as shown in FIGS. 19 to 22 has eight reaction chambers 25.

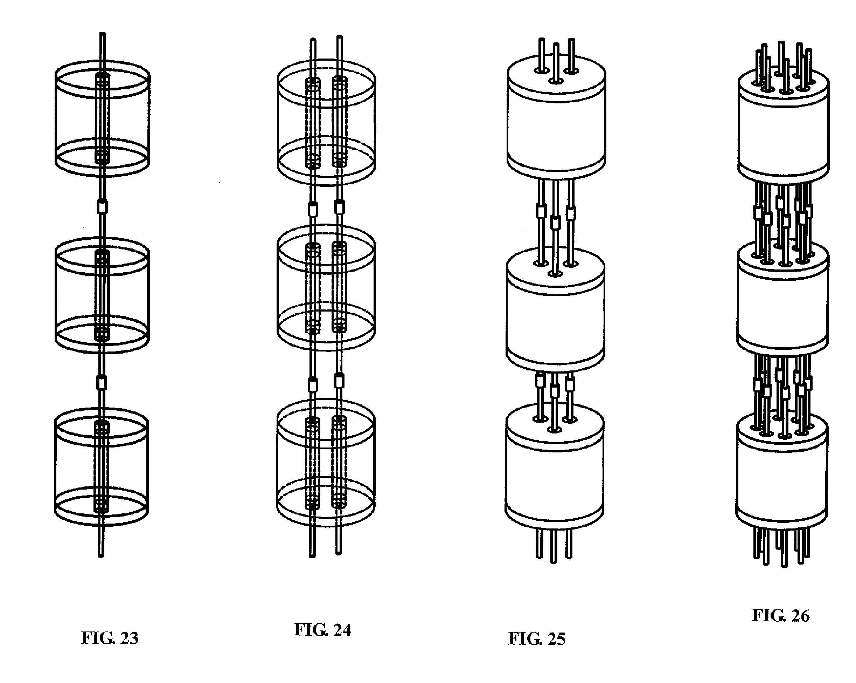

In the above embodiments, the reaction chambers 25 may be configured such that they are equidistant from one another as set forth above in the embodiment of FIGS. 1 to 6, or in any other manner depending on the particular application. The reaction chambers 25 may be in series or in parallel or in any combination of the foregoing, such as a group of eight reaction chambers in parallel, all in series with other groups of eight reaction chambers all in parallel as shown in FIG. 26. FIGS. 23 to 25 show one, two, and three reaction chambers, respectively, in parallel, all in series with other groups of one, two or three reaction chambers in parallel. The reaction chambers 25 may also be of any size or shape depending on the need of any particular application. In another example the reaction chambers 25 may be parallel to each other and may or may not be parallel to the outer wall 15 of the system.

It is contemplated that in any system configuration, all reactor chambers need not be in use at the same time.

As described in the above embodiments, by setting the insulator 65 around the reaction chamber 25, heat exchange through conduction or convection is prevented. For example, where a vacuum is used as an insulator, there is almost no heat convection and also the heat conduction is very little because the heat conductivity of the vacuum is very low. By setting the outer shield 55 and/or the inner shield, heat exchange through radiation is prevented.

Therefore, in the system of the present invention, three ways of heat transfer, i.e., conduction, convection and radiation, is greatly prevented. Thus heat exchange between the reaction system and the outside environment is reduced, heat stability of the system is ensured, and reaction temperature is prevented form changing over time. Furthermore, since temperature effect to the system from the outside environment is almost eliminated, temperature distribution along each reaction chamber 25 mainly depends on the temperatures of the temperature control elements 45 and 50 and heat conductivity of the reaction chamber 25. In a case that the top 35 of each reaction chamber 25 is at a same temperature, the bottom 40 of each reaction chamber 25 is also at a same temperature, and all the reaction chambers 25 are configured to have a same structure, configured from the same material and have a same heat conductivity, the reaction chambers 25 may have a substantially same temperature within a cross section of the system taken perpendicular to the extending directions of the reaction chambers 25. That ensures the reaction chambers 25 have a substantially same temperature at corresponding positions, such that the reaction chambers 25 are ensured to have a substantially same reaction temperature.

**Claims**

**1.** A reaction system for conducting multiple reactions comprising a plurality of reaction chambers, a temperature controller thermally coupled to the reaction chambers, and an insulator thermally coupled to the reaction chambers, **characterized in that** the reaction system further comprises a heat radiation shield, and the insulator comprises a vacuum environment.

**2.** The reaction system according to claim 0, **characterized in that** the reaction system further comprises a shell.

**3.** The reaction system according to claim 0, **characterized in that** the insulator is formed between the shell and the plurality of reaction chambers.

**4.** The reaction system according to claim 2, **characterized in that** the vacuum environment is at least partially formed between the shell and the plurality of reaction chambers.

**5.** The reaction system according to claim 1, 2, 3 or 4, **characterized in that** the temperature controller comprises first temperature control elements thermally coupled to two opposite side of the reaction chambers.

**6.** The reaction system according to claim 5, **characterized in that** the first temperature control element is thermally coupled to all the reaction chambers.

**7.** The reaction system according to claim 5, **characterized in that** the temperature control elements are thermally coupled to the reaction chambers respectively.

**8.** The reaction system according to claim 5, **characterized in that** the temperature controller comprises a second temperature control element thermally coupled to the shell and second temperature control element is configured such that can be flooded with fluids.

**9.** The reaction system according to claim 5, **characterized in that** the plurality of reaction chambers are in a parallel configuration.

**10.** The reaction system according to claim 9, **characterized in that** each of the reaction chambers is substantially equidistant from the reaction chamber adjacent to it and all the reaction chambers substantially equidistant from an outer wall of the shell.

**11.** The reaction system according to claim 1, 2, 3, or 4, **characterized in that** the temperature controller further comprises an opening to selectively replace the vacuum environment with a fluid to rapidly change the temperature of the system.

**12.** The reaction system according to claim 1, 2, 3, or 4, **characterized in that** the reaction system further comprises a temperature sensor thermally coupled to the reaction chambers.

**13.** The reaction system according to claim 1, 2, 3, or 4, **characterized in that** the heat radiation shield is placed in the insulator.

**14.** The reaction system according to claim 1, 2, 3, or 4, **characterized in that** the heat radiation shield is placed in the reaction chamber.

**15.** The reaction system according to claim 1, 2, 3,

or 4, **characterized in that** the heat radiation shield is placed on the shell.

**16.** The reaction system according to claim 1, 2, 3, or 4, **characterized in that** the reaction system is accommodated in a housing with at least one function of temperature control and heat preservation.

**17.** The reaction system according to claim 1, **characterized in that** the reaction system further comprises reaction tubes detachably assembled in the reaction chambers, respectively.

**18.** A reaction system comprising at least one reaction chamber, temperature control elements thermally coupled to two sides of the at least one reaction chamber respectively, and an insulator thermally coupled to the at least one reaction chamber.

**19.** The system according to claim 18, **characterized in that** the insulator comprises a vacuum environment.

**20.** The system according to claim 19, **characterized in that** the system further compries a shell.

**21.** The system according to claim 20, **characterized in that** the vacuum environment is at least partially formed between the shell and the plurality of reaction chambers.

**22.** The system according to claim 21, **characterized in that** the system further comprises an opening to selectively replace the vacuum environment with a fluid to rapidly heat or cool the system.

**23.** The system according to claim 18, 19, 20, 21 or 22, **characterized in that** the system further comprises a heat radiation shield.

**24.** The system according to claim 23, **characterized in that** the heat radiation shield is placed in the insulator.

**25.** The system according to claim 23, **characterized in that** the heat radiation shield is placed in the at least one reaction chamber.

**26.** The system according to claim 23, **characterized in that** the heat radiation shield is placed on the shell.

**27.** The system according to claim 18, 19, 20, 21 or 22, **characterized in that** the temperature control elements thermally coupled to the two sides of the reaction chamber are the same.

**28.** The system according to claim 18, 19, 20, 21 or 22, **characterized in that** the system further comprises temperature sensor.

**29.** A reaction system for conducting multiple reactions comprising a plurality of the systems according to claim 18, **characterized in that** the plurality of the systems are arranged in an array.

**30.** The reaction system according to claim 29, **characterized in that** the plurality of the systems are arranged in parallel.

**31.** The reaction system according to claim 30, **characterized in that** the plurality of the systems are arranged in series.

**32.** The reaction system according to claim 29, 30 or 31, **characterized in that** the at least one reaction chamber of each of the systems each is substantially equidistant from the reaction chambers adjacent to it.

**33.** The reaction system according to claim 18, **characterized in that** the system further comprises a reaction tube detachably assembled in the reaction chamber.

**34.** A system for conducting multiple reactions comprising a means for conducting a plurality of reactions, a means for containing the means for conducting a plurality of reactions, and a means for controlling the temperature of the system, **characterized in that** the system further comprises a means for insulating the system.

**35.** The system according to claim 34, **characterized in that** the system further comprises a means for forming a vacuum environment.

**35.** The system according to claim 34, **characterized in that** the system further comprises a means for selectively replacing the vacuum environment with a fluid to rapidly change temperature of the system.

**37.** The system according to claim 34, 35 or 36, **characterized in that** the means for controlling the temperature comprises a means for controlling the temperature at first side of the means for conducting a plurality of reactions and a means for controlling the temperature at a second side of the means for conducting a plurality of reactions.

**38.** The system according to claim 37, **characterized in that** the means for controlling the temperature at the first side and second side of the means for conducting a plurality of reactions is the same.

**39.** The system according to claim 38, **character-**

**ized in that** the system further comprises a means for shielding heat radiation into or out of the system.

**40.** The system according to claim 39, **characterized in that** the system is entirely received in a means with temperature control function.

**41.** A reaction system for conducting multiple reactions comprising a shell, a plurality of reaction chambers, and an insulator thermally coupled to the reaction chambers, **characterized in that** the insulator comprises a vacuum environment, and the system further comprises at least one temperature controller thermally coupled to a first side of the reaction chambers, at least one temperature controller thermally coupled to a second side of the reaction chambers, and a heat radiation shield for reducing heat loss or gain in the reaction chambers.

**42.** The system according to claim 41, **characterized in that** the plurality of reaction chambers are in a parallel configuration.

**43.** The system according to claim 41, **characterized in that** each of the reaction chambers is substantially equidistant from the reaction chambers adjacent to it and all the reaction chambers are substantially equidistant from the shell.

**44.** The system according to claim 43, **characterized in that** the system further comprises a temperature sensor.

**45.** The system according to claim 44, **characterized in that** the system further comprises an opening to selectively replace the vacuum environment with a fluid to rapidly change temperature of the system.

**46.** The system according to claim 41 or 45, **characterized in that** the temperature controller is thermally coupled to all the reaction chambers.

**47.** The system according to claim 41 or 45, **characterized in that** the temperature controllers are thermally coupled to the reaction chambers respectively.

**48.** The system according to claim 41, **characterized in that** the system further comprises reaction tubes detachably assembled in the reaction chambers, respectively.

**49.** The system according to claim 1, 17, 18, 29, 33, 41 or 48, **characterized in that** the system further comprises a holder including a holding element and a supporting element for supporting, fastening or hanging the holding element in the reaction chamber or reaction tube.

**50.** The system according to claim 49, **characterized in that** a step portion is provided in the reaction chamber or reaction tube, and the supporting element stands upon the step portion.

**51.** The system according to claim 49, **characterized in that** the holding element is hung in the reaction chamber or reaction tube by the supporting element.

**52.** The system according to claim 49, **characterized in that** the holder further comprises a force receiving portion adapted to receive a force to push or pull the holding element and /or the supporting element out of the reaction chamber or reaction tube.

**53.** The system according to claim 52, **characterized in that** the force receiving portion is located at one of the holding element, the supporting element, and a joint between the holding element and the supporting element, or is provided separate from the holding element and the supporting element.

**54.** The system according to claim 17, 33 or 48, **characterized in that** the reaction tube comprises a main tube and a smaller tube having an outer diameter smaller than the main tube.

**FIG. 1**

**FIG. 2**

**FIG. 3**

**FIG. 4**

**FIG. 5**

**FIG. 6**

**FIG. 6(a)**

FIG. 6(b)

**FIG. 6(c)**

27

274

275

272

**FIG. 6(d)**

2751

275a

274a

FIG. 6(e)

2751b

275b

274b

FIG. 6(f)

2751

275b

274b

FIG. 6(g)

275c

274c

FIG. 6(h)

**FIG. 7**

**FIG. 8**

25

**FIG. 9**

**FIG. 10**

**FIG. 11**

**FIG. 12**

**FIG. 13**

**FIG. 14**

**FIG. 15**

**FIG. 16**

**FIG. 17**

25

**FIG. 18**

V   V

25

**FIG. 19**

**FIG. 20**

**FIG. 21**

**FIG. 22**

EP 1 932 584 A1

FIG. 26

FIG. 25

FIG. 24

FIG. 23

24

# INTERNATIONAL SEARCH REPORT

| International application No. |
|---|
| PCT/CN2006/002436 |

## A. CLASSIFICATION OF SUBJECT MATTER

### See extra sheet
According to International Patent Classification (IPC) or to both national classification and IPC

## B. FIELDS SEARCHED

Minimum documentation searched (classification system followed by classification symbols)

IPC    B01J   B01D   G01N

Documentation searched other than minimum documentation to the extent that such documents are included in the fields searched

Electronic data base consulted during the international search (name of data base and, where practicable, search terms used)

CNPAT, CNKI, WPI, EPODOC, PAJ: react+, heat, thermal, temperature, insulat+, vacuum

## C. DOCUMENTS CONSIDERED TO BE RELEVANT

| Category* | Citation of document, with indication, where appropriate, of the relevant passages | Relevant to claim No. |
|---|---|---|
| X | CN1643383A ((CNSJ) CONSEJO SUPERIOR INVESTIGACIONES CIENTIF.) 20 Jul. 2005 (20.07.2005) Description page 8 line 19 – page 21 line 8, figures 1-6 | 1-54 |
| X | CN1522174A ((BADI) BASF AG.) 18 Aug. 2004 (18.08.2004) Description page 6 line 10 – page 19 line 10, figures 1-3 | 1-54 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 05 Jan.2007 (05.01.2007) | 01 · FEB 2007 (01 · 02 · 2007) |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LI, Xiaonan Telephone No. 86-10-62084750 |

Form PCT/ISA /210 (second sheet) (April 2005)

## INTERNATIONAL SEARCH REPORT
### Information on patent family members

International application No.

PCT/CN2006/002436

| Patent Documents referred in the Report | Publication Date | Patent Family | Publication Date |
|---|---|---|---|
| CN1643383A | 20.07.2005 | | |
| | | WO03058254 A1 | 17.07.2003 |
| | | AU2003209758 A1 | 24.07.2003 |
| | | ES2209588 A1 | 16.06.2004 |
| | | EP1473569 A1 | 03.11.2004 |
| | | US2005031491 A1 | 10.02.2005 |
| | | ES2209588 B1 | 01.04.2005 |
| | | JP2005514624 T | 19.05.2005 |
| | | EP20030729261 | 14.01.2003 |
| CN1522174A | 18.08.2004 | | |
| | | WO03004988 A2 | 16.01.2003 |
| | | DE10132252 A1 | 23.01.2003 |
| | | EP1406723 A2 | 14.04.2004 |
| | | AU2002321065 A1 | 21.01.2003 |
| | | US2004156750 A1 | 12.08.2004 |
| | | KR20040039172 A | 10.05.2004 |
| | | MXPA03011308 A | 01.04.2004 |
| | | JP2005500521 T | 06.01.2005 |
| | | HU0400376 A2 | 28.01.2005 |
| | | INCHENP200400008E | 18.12.2004 |
| | | BR0205716 A | 28.06.2005 |
| | | EP20020754687 | 14.06.2002 |

Form PCT/ISA/210 (patent family annex) (April 2005)

# INTERNATIONAL SEARCH REPORT

| International application No. |
| --- |
| PCT/CN2006/002436 |

CLASSIFICATION OF SUBJECT MATTER

B01J 19/00 (2006.01) i
B01J 8/00 (2006.01) i
G01N 35/08 (2006.01) i

Form PCT/ISA /210 (extra sheet) (April 2005)